# EUROPÄISCHE PATENTSCHRIFT

(11) **EP 1 772 193 B1**
(45) Veröffentlichungstag und Bekanntmachung des Hinweises auf die Patenterteilung: **02.04.2008**
(21) Anmeldenummer: 05109391.2
(22) Anmeldetag: 10.10.2005
(51) Int. Cl.: B04B 5/00, B01D 45/14, F01M 13/04

(54) **Tellerseparator**
Centrifugal separator
Séparateur centrifuge

(43) Veröffentlichungstag der Anmeldung: 11.04.2007
(73) Patentinhaber: MAHLE Filtersysteme GmbH, 70376 Stuttgart (DE)
(72) Erfinder: Hartmann, Edwin, 71397 Weiler zum Stein (DE); Sauter, Hartmut, 71272 Renningen (DE)
(74) Vertreter: Bongen, Renaud & Partner

(56) Entgegenhaltungen:
- WO-A-20/04022239
- DE-A1- 10 044 615
- DE-A1-0102004 030 91
- GB-A- 2 169 225
- US-A1- 2004 107 681
- US-B1- 6 821 319

## Beschreibung

Die vorliegende Erfindung betrifft einen Tellerseparator, insbesondere für eine Entlüftungsvorrichtung eines Kurbelgehäuses einer Brennkraftmaschine, vorzugsweise eines Kraftfahrzeuges, mit den Merkmalen des Oberbegriffs des Anspruchs 1.

Aus der DE 100 44 615 A1 ist ein derartiger Tellerseparator bekannt. Ein Tellerseparator dieser Art weist in einem Gehäuse einen drehbar gelagerten Rotor auf, der mehrere in Rotorlängsrichtung aufeinander gestapelte Teller drehfest trägt. Zwischen benachbarten Tellern sind Strömungspfade ausgebildet, die von radial außen nach radial innen führen. Durch die Rotation des Rotors im Betrieb des Tellerseparators wirken auf flüssige oder feste Verunreinigungen, welche ein die Teller bzw. die dazwischen angeordneten Strömungspfade von außen nach innen durchströmendes Gas mitführt, Zentrifugalkräfte, welche die Verunreinigungen radial nach außen abdrängen bzw. verhindern, dass die Verunreinigungen bis zum Inneren des Rotors gelangen. Auf diese Weise trennt der Rotor im Gehäuse einen radial außen liegenden Rohraum von einem radial innenliegenden Reinraum, der in der Regel zumindest teilweise durch das Innere des hohlen Rotors gebildet ist. Der Tellerseparator besitzt außerdem einen Rohgaseinlass, durch den ein mit festen und/oder flüssigen Verunreinigungen beladenes Gas, vorzugsweise mit Rußpartikeln und/oder Öltröpfchen beladene, aus einem Kurbelgehäuse einer Brennkraftmaschine abgeführte Luft, von außen in den Rohraum gelangt. Des weiteren besitzt der Tellerseparator einen Reingasauslass, durch den das von den Verunreinigungen gereinigte Gas vom Reinraum nach außen gelangt. Außerdem verfügt der Tellerseparator über einen Austritt, durch den die abgereinigten Verunreinigungen vom Rohraum nach außen gelangen. Bei einer bevorzugten Anwendung des Tellerseparators ist der Rohgaseinlass mit einer Entnahmestelle eines Kurbelgehäuses verbunden, während der Reingasauslass zu einem Saugtrakt der Brennkraftmaschine führt. Der Austritt ist beispielsweise wieder an das Kurbelgehäuse bzw. an dessen Ölwanne angeschlossen.

Im Betrieb des Tellerseparators kann es vorkommen, dass ausgeschiedene Flüssigkeit z.B. entlang der Gehäusewand unter Umgehung sämtlicher Teller bis zum Reingasauslass gelangt. Zwar ist in diesem Bereich beim bekannten Tellerseparator eine Radialdichtung angeordnet, die jedoch aufgrund der hohen Drehzahlen des Rotors gerade gegenüber Öl nicht immer voll wirksam ist. Des weiteren besitzt eine derartige Dichtung eine endliche Standzeit und ist vergleichsweise teuer.

Die vorliegende Erfindung beschäftigt sich mit dem Problem, für einen Tellerseparator der eingangs genannten Art eine verbesserte Ausführungsform anzugeben, bei der insbesondere die Abdichtung des Rohraums gegenüber dem Reingasauslass verbessert ist.

Dieses Problem wird durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, mit Hilfe des in Richtung Reingasauslass letzten Tellers in einem Bereich zwischen diesem letzten Teller und dem Gehäuse eine entgegen dem Druckgefälle zwischen Rohraum und Reinraum gerichtete Rückströmung zu erzeugen. Auf diese Weise kann Flüssigkeit, die beispielsweise innen entlang der Gehäusewand in Richtung Reingasauslass kriecht, mit dieser Rückströmung beaufschlagt werden, was den Kriechprozess der Flüssigkeit zumindest abbremst und bei entsprechender Auslegung sogar umkehrt, so dass die Flüssigkeit nicht gegen die Rückströmung kriechen kann. Auf diese Weise wird quasi eine aerodynamische Sperre für ausgeschiedene Flüssigkeiten erzeugt, die effektiv ein Vordringen der Flüssigkeit bis zum Reingasauslass verhindert oder zumindest behindert.

Gemäß einer besonders vorteilhaften Ausführungsform kann die Beschaufelung an einer von den anderen Tellern abgewandten Axialseite zum Gehäuse hin offen sein. Durch diese Bauweise kann die zum Reingasauslass führende Gehäusewand direkt mit der Rückströmung beaufschlagt werden, was die Sperrwirkung dieser Rückströmung verbessert.

Um die Rückströmung zu verstärken, kann bei einer besonders effektiven Ausführungsform die Beschaufelung gekrümmte Schaufeln aufweisen, die radial von innen gekrümmt nach außen und entgegen der Rotationsrichtung des Rotors verlaufen.

Darüber hinaus kann der mit der Beschaufelung ausgestattete Teller zusätzliche Merkmale aufweisen, welche die Dichtwirkung dieses Abschluss- oder Decktellers zusätzlich verbessern. Beispielsweise kann sich dieser Abschlussteller radial außen soweit bis an das Gehäuse erstrecken, dass sich zwischen einem Gehäuse und einem Tellerrand ein Dichtspalt ausbildet. In diesem Dichtspalt strömt die Rückströmung mit erhöhter Strömungsgeschwindigkeit in den übrigen Rohraum ein, was es für entlang der Wand kriechende Flüssigkeit extrem erschwert, diesen Dichtspalt entgegen der verstärkten Rückströmung zu überwinden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf einen teilweise aufgeschnittenen Tellerseparator nach der Erfindung,
- Fig. 2: eine perspektivische Ansicht auf einen mit einer Beschaufelung ausgestatteten Teller,
- Fig. 3: eine perspektivische Ansicht wie in Fig. 2, jedoch aus einer anderen Blickrichtung.

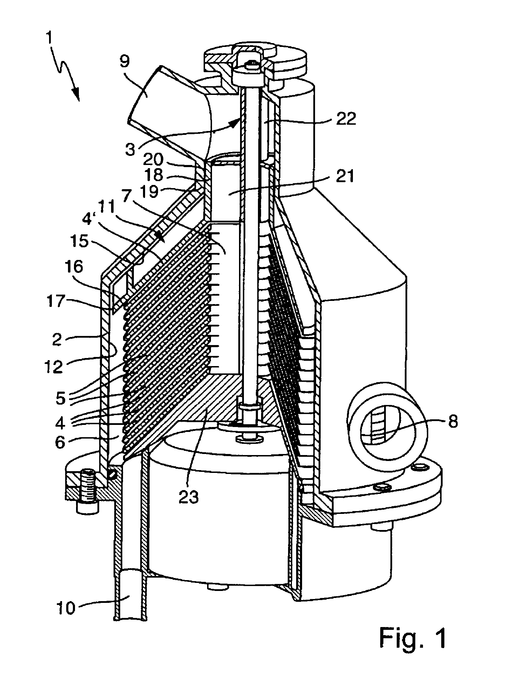

Entsprechend Fig. 1 besitzt ein erfindungsgemäßer Tellerseparator 1 ein Gehäuse 2, in dem ein Rotor 3 drehbar gelagert ist. Der Rotor 3 trägt mehrere, in Rotorlängsrichtung aufeinander gestapelte Teller 4, wobei die einzelnen Teller 4 mit dem Rotor 3 direkt oder indirekt drehfest verbunden sind. Zwischen benachbarten Tellern 4 ist jeweils ein Spalt 5 ausgebildet. Diese Spalte 5 bilden dabei einen Strömungspfad, der von einem radial außenliegenden Rohraum 6 zu einem im Inneren des Rotors 3 ausgebildeten und somit radial innenliegenden Reinraum 7 führen. Auf diese Weise trennt der Rotor 3 im Inneren des Gehäuses 2 den Rohraum 6 vom Reinraum 7.

Der Tellerseparator 1 besitzt einen Rohgaseinlass 8, der mit dem Rohraum 6 kommunizierend verbunden ist, so dass durch den Rohgaseinlass 8 ein Gas von außen in den Rohraum 6 einleitbar ist. Dieses Rohgas kann dabei mit festen und/oder flüssigen Verunreinigungen beladen sein. Des weiteren umfasst der Tellerseparator 1 einen Reingasauslass 9, der mit dem Reinraum 7 kommunizierend verbunden ist, so dass durch den Reingasauslass 9 das von den Verunreinigungen gereinigte Gas vom Reinraum 7 nach außen geleitet werden kann. Schließlich weist der Tellerseparator 1 noch einen Austritt 10 auf, der ebenfalls mit dem Rohraum 6 kommunizierend verbunden ist und durch den die abgereinigten Verunreinigungen aus dem Rohraum 6 nach außen abgeleitet werden können.

Insoweit entspricht der Tellerseparator 1 im wesentlichen dem aus der bereits eingangs genannten DE 100 44 615 A1 bekannten Tellerseparator, so dass im Hinblick auf die Funktionsweise sowie im Hinblick auf weitere konstruktive Details auf dieses Dokument verwiesen werden kann, dessen Offenbarungsgehalt hiermit durch ausdrückliche Bezugnahme in den Inhalt der vorliegenden Unterlagen aufgenommen wird.

Erfindungsgemäß ist nun derjenige Teller 4', welcher unmittelbar an den Reingasauslass 9 angrenzt, mit einer Beschaufelung 11 versehen. Diese Beschaufelung 11 ist dabei so ausgestaltet, dass sie im Betrieb des Tellerseparators 1, also bei rotierendem Rotor 3, eine radial nach außen gerichtete Rückströmung erzeugt. Diese Rückströmung strömt somit entgegen einem zwischen Rohlufteinlass 8 und Reingasauslass 9 herrschenden Druckgefälle, welches eine Gasströmung von radial außen nach innen durch die Teller 4 bzw. deren Spalte 5 antreibt.

Durch diese Bauweise wird es einer ausgeschiedenen Flüssigkeit, die aufgrund der Zentrifugalwirkung zwangsläufig eine dem Rotor 3 zugewandte Wand 12 des Gehäuses 2 benetzt, extrem erschwert, entlang dieser Wand 12 in Richtung Reingasauslass 9 zu kriechen. Denn zumindest im Bereich dieses Tellers 4' wird die Wand 12 von der Rückströmung beaufschlagt, so dass die Kriechneigung der Flüssigkeit extrem abgebremst, wenn nicht sogar die Flüssigkeit in Richtung der Rückströmung zurückgetrieben wird. Dieser mit der Beschaufelung 11 ausgestattete spezielle Teller 4' bildet gleichzeitig einen Abschluss der aufeinander gestapelten Teller 4 und wird im folgenden daher auch als Abschlussteller 4' bezeichnet.

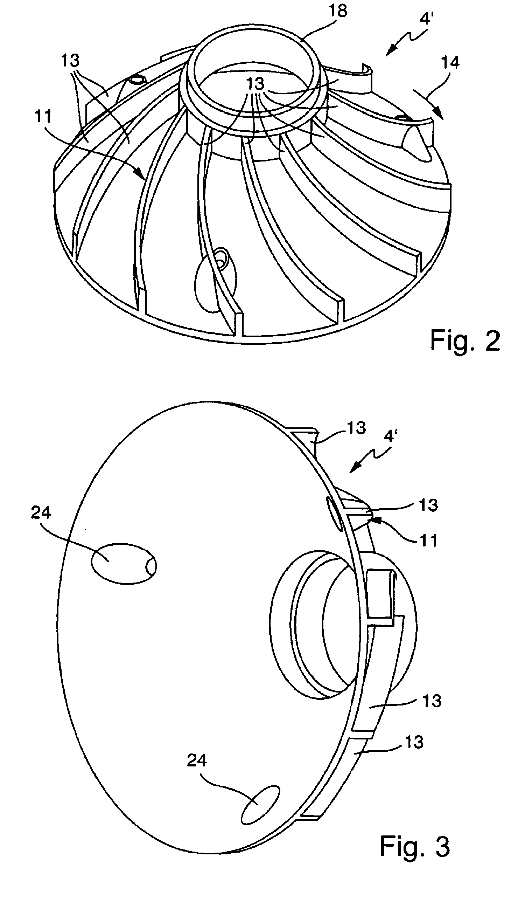

Wie insbesondere aus den Fig. 2 und 3 hervorgeht, kann die Beschaufelung 11 mit gekrümmten Schaufeln 13 ausgestattet sein. Diese gekrümmte Schaufeln 13 sind dabei so angeordnet, dass sie von radial innen nach radial außen gekrümmt und zwar entgegen einer durch einen Pfeil angedeuteten Rotationsrichtung 14 des Rotors 3 verlaufen. Durch ihren gekrümmten Verlauf unterstützten die Schaufeln die Ausbildung einer extrem wirksamen Rückströmung im Bereich des Abschlusstellers 4'. Gleichzeitig ist den Fig. 2 und 3 entnehmbar, dass die Beschaufelung 11 an einer in Fig. 2 dem Betrachter zugewandten Axialseite des Abschlusstellers 4', die im Einbauzustand gemäß Fig. 1 von den anderen Tellern 4 abgewandt ist, zum Gehäuse 2 hin offen ist. Auf diese Weise wird erreicht, dass auch ein in axialer Richtung dem Abschlussteller 4' zugewandter Abschnitt 15 der Gehäusewand 12 unmittelbar mit der Rückströmung beaufschlagt werden kann, was die Brems- oder Trennwirkung der Rückströmung verbessert.

Es ist klar, dass bei einer alternativen Ausführungsform die Beschaufelung 11 grundsätzlich auch mit geradlinigen Schaufeln ausgebildet sein kann, die dementsprechend radial von innen geradlinig nach außen verlaufen, also quasi sternförmig. Eine derartige Bauweise hätte den Vorteil, dass sie von der Rotationsrichtung 14 des Rotors 3 unabhängig wäre.

Zurückkommend auf Fig. 1 ist erkennbar, dass bei der hier gezeigten, bevorzugten Ausführungsform die radiale Erstreckung des Abschlusstellers 4' größer ist als die der anderen Teller 4. Dies hat zur Folge, dass ein radial außenliegender Tellerrand 16 des Abschlusstellers 4' radial über die anderen Teller 4 in Richtung Gehäuse 2 vorsteht. Zweckmäßig steht dieser Tellerrand 16 soweit bis an die Wand 12 des Gehäuses 2 vor, dass sich zwischen der Gehäusewand 12 und diesem Tellerrand 16 ein Dichtspalt 17 ausbildet. Die dichtende Wirkung dieses Dichtspalts 17 entsteht dabei im Betrieb des Tellerseparators 1 durch die von der Beschaufelung 11 erzeugte Rückströmung, welche den relativ kleinen Durchströmungsquerschnitt im Dichtspalt 17 durchdringen muss. Dies führt im Dichtspalt 17 zu einer relativ hohen Strömungsgeschwindigkeit für die Rückströmung. Mit der Folge, dass gerade im Bereich des Dichtspalts 17 die aerodynamische Trennwirkung oder Rückhaltewirkung für feste oder flüssige Verunreinigungen extrem ausgeprägt ist, was es insbesondere der Flüssigkeit zusätzlich erschwert, entlang der Wand 12 durch den Dichtspalt 17 zu kriechen.

Bei den hier gezeigten Ausführungsformen besitzt der Abschlussteller 4' radial innen außerdem eine zylindrische Nabe 18, die axial durchströmbar ausgestaltet ist. Da die Nabe 18 axial durchströmbar ausgestaltet ist, kann das gereinigte Gas vom Reinraum 7 durch die Nabe 18 zum Reingasauslass 9 gelangen. Insoweit bildet das Innere der Nabe 18 einen Bestandteil des Reinraums 7.

Die Nabe 18 erstreckt sich entlang eines zylindrischen Halsabschnitts 19 des Gehäuses 2, und zwar derart, dass sich dabei radial zwischen der Nabe 18 und diesem Halsabschnitt 19 ein weiterer Dichtspalt 20 ausbildet. Dieser Dichtspalt 20 entfaltet seine Dichtwirkung im wesentlichen durch ein relativ kleines Radialspiel in Verbindung mit einer relativ gro-ßen axialen Länge.

Bei der in Fig. 1 gezeigten Ausführungsform ist im Inneren der Nabe 18 über Stege 21 eine Stützhülse 22 gehaltert. Auf diese Weise kann bei dieser Ausführungsform der Abschlussteller 4' dazu verwendet werden, die übrigen Teller 4 axial gegen eine Grundplatte 23 zu verspannen. Hierbei kann dieser Abschlussteller 4' direkt mit dem Rotor 3 drehfest verbunden sein.

Im Unterschied dazu zeigen die Fig. 2 und 3 eine Ausführungsform mit einer innen freien Nabe 18. Die drehfeste Kopplung dieses Abschlusstellers 4' mit dem Rotor 3 kann dabei nicht direkt erfolgen, sondern indirekt über den unmittelbar dazu benachbarten Teller 4. Hierzu besitzt der Abschlussteller 4' an einer dem benachbarten Teller 4 zugewandten Axialseite, die in Fig. 3 dem Betrachter zugewandt ist, kegelförmige Aufnahmen 24, in welche hier nicht erkennbare komplementäre Kegel, die am benachbarten Teller 4 ausgebildet sind, formschlüssig eingreifen.

Eine bevorzugte Anwendungsform des Tellerseparators 1 wird dabei innerhalb einer Entlüftungsvorrichtung für ein Kurbelgehäuse einer Brennkraftmaschine, insbesondere in einem Kraftfahrzeug, gesehen. Hierzu wird eine vom Kurbelgehäuse kommende Entlüftungsleitung an den Rohgaseinlass 8 angeschlossen. Hierdurch gelangt ein mit Öltröpfchen und ggf. mit Rußpartikeln beladenes Gas vom Kurbelgehäuse zum Tellerseparator 1. An den Reingasauslass 9 wird dagegen eine Rückführleitung angeschlossen, die das von den Verunreinigungen befreite Gas zweckmäßig zu einem Saugtrakt der Brennkraftmaschine führt. Im Unterschied dazu wird an den Austritt 10 eine Abflussleitung angeschlossen, die zurück zum Kurbelgehäuse bzw. zu einer Ölwanne der Brennkraftmaschine führt. Somit gelangt das abgereinigte Öl wieder zurück in den Ölkreis der Brennkraftmaschine.

## Patentansprüche

1. Tellerseparator, insbesondere für eine Entlüftungsvorrichtung eines Kurbelgehäuses einer Brennkraftmaschine, vorzugsweise eines Kraftfahrzeugs,
- mit einem Gehäuse (2), in dem ein Rotor (3) drehbar gelagert ist, der mehrere in Rotorlängsrichtung aufeinander gestapelte Teller (4) drehfest trägt und der im Gehäuse (2) einen radial außenliegenden Rohraum (6) von einem radial innenliegenden Reinraum (7) trennt,
- mit einem Rohgaseinlass (8), durch den ein mit festen und/oder flüssigen Verunreinigungen beladenes Gas von außen in den Rohraum (6) gelangt,
- mit einem Reingasauslass (9), durch den das von den Verunreinigungen gereinigte Gas vom Reinraum (7) nach außen gelangt,
- mit einem Austritt (10), durch den die abgereinigten Verunreinigungen vom Rohraum (6) nach außen gelangen,
**dadurch gekennzeichnet,**
**dass** der unmittelbar an den Reingasauslass (9) angrenzende Teller (4') eine Beschaufelung (11) aufweist, die im Betrieb des Tellerseparators (1) eine radial nach außen gerichtete Rückströmung erzeugt.

2. Tellerseparator nach Anspruch 1,
**dadurch gekennzeichnet,**
**dass** die Beschaufelung (11) an einer von den anderen Tellern (4) abgewandten Axialseite zum Gehäuse (2) hin offen ist.

3. Tellerseparator nach Anspruch 1 oder 2,
**dadurch gekennzeichnet,**
- **dass** die Beschaufelung (11) geradlinige Schaufeln aufweist, die radial von innen geradlinig nach außen verlaufen, oder
- **dass** die Beschaufelung (11) gekrümmte Schaufeln (13) aufweist, die radial von innen gekrümmt nach außen und entgegen der Rotationsrichtung (14) des Rotors (3) verlaufen.

4. Plattenseparator nach einem der Ansprüche 1 bis 3,
**dadurch gekennzeichnet,**
**dass** die radiale Erstreckung des mit der Beschaufelung (11) ausgestatteten Tellers (4') größer ist als die der anderen Teller (4).

5. Tellerseparator nach einem der Ansprüche 1 bis 4,
**dadurch gekennzeichnet,**
**dass** sich der mit der Beschaufelung (11) ausgestattete Teller (4') radial außen soweit bis an das Gehäuse (2) erstreckt, dass sich zwischen Gehäuse (2) und einem Tellerrand (16) ein Dichtspalt (17) ausbildet.

6. Tellerseparator nach einem der Ansprüche 1 bis 5,
**dadurch gekennzeichnet,**
**dass** der mit der Beschaufelung (11) ausgestattete Teller (4') radial innen eine zylindrische Nabe (18) aufweist, die sich unter Ausbildung eines Dichtspalts (20) entlang eines zylindrischen Halsabschnitts (19) des Gehäuses (2) erstreckt.

7. Tellerseparator nach Anspruch 6,
**dadurch gekennzeichnet,**
**dass** die Nabe (18) axial durchströmbar ausgestaltet ist, so dass das gereinigte Gas vom Reinraum (7) durch die Nabe (18) zum Reingasauslass (9) gelangt.

8. Tellerseparator nach einem der Ansprüche 1 bis 7,
**dadurch gekennzeichnet,**
**dass** der mit der Beschaufelung (11) ausgestattete Teller (4') nicht direkt, sondern indirekt über den dazu benachbarten Teller (4) mit dem Rotor (3) drehfest verbunden ist.

## Claims

1. A centrifugal separator, in particular for a ventilation device of a crankcase of an internal combustion engine, preferably in a motor vehicle
- having a housing (2) in which a rotor (3) is rotatably mounted, carrying a plurality of plates (4) stacked one above the other in the longitudinal direction of the rotor and dividing a crude space (6) which is on the outside radially from a clean space (7) which is on the inside radially in the housing (2),
- having a crude gas inlet (8) through which a gas loaded with solid and/or liquid impurities goes from the outside into the crude space (6),
- having a clean gas outlet (9) through which the gas that has been cleaned of impurities goes from the clean space (7) to the outside,
- having an outlet (10) through which the impurities that have been removed go from the crude space (6) to the outside,
**characterized in that**
the plate (4') directly adjacent to the clean gas outlet (9) has blading (11) which creates a return flow directed radially outward during operation of the centrifugal separator (1).

2. The centrifugal separator according to Claim 1,
**characterized in that**
the blading (11) is open toward the housing (2) on an axial side facing away from the other plates (4).

3. The centrifugal separator according to Claim 1 or 2,
**characterized in that**
- the blading (11) has straight blades which run radially from the inside to the outside in a straight line, or
- the blading (11) has curved blades (13) which run radially from the inside to the outside with a curvature and run opposite the direction of rotation (14) of the rotor (3).

4. The centrifugal separator according to any one of Claims 1 through 3,
**characterized in that**
the radial extent of the plate (4') equipped with the blading (11) is greater than that of the other plate (4).

5. The centrifugal separator according to any one of Claims 1 through 4,
**characterized in that**
the plate (4') which is equipped with the blading (11) extends radially to the outside up to the housing (2) in such a way that a sealing gap (17) develops between the housing (2) and the edge (16) of a plate.

6. The centrifugal separator according to any one of Claims 1 through 5,
**characterized in that**
the plate (4') equipped with the blading (11) has a cylindrical hub (18) on the inside radially, extending along a cylindrical neck section (19) of the housing (2), forming a sealing gap (20).

7. The centrifugal separator according to Claim 6,
**characterized in that**
the hub (18) is designed to allow axial flow to pass through it, so that the cleaned gas can pass through the hub (18) from the clean space (7) to the clean gas outlet (9).

8. The centrifugal separator according to any one of Claims 1 through 7,
**characterized in that**
the plate (4') equipped with the blading (11) is not connected to the rotor (3) directly but instead is connected indirectly via the adjacent plate (4).

## Revendications

1. Séparateur à coupelles, en particulier pour un dispositif de purge d'air d'un carter de vilebrequin d'un moteur à combustion interne, de préférence d'un véhicule automobile, présentant
- un carter (2), dans lequel est logé en rotation un rotor (3) qui porte de manière solidaire en rotation plusieurs coupelles (4) empilées les unes sur les autres et qui sépare dans le carter (2) un espace brut (6) situé radialement à l'extérieur et un espace pur (7) situé radialement à l'intérieur,
- une entrée de gaz brut (8) par laquelle un gaz chargé en impuretés solides et/ou liquides parvient de l'extérieur dans l'espace brut (6),
- une sortie de gaz pur (9) par laquelle le gaz débarrassé des impuretés parvient de l'espace pur (7) vers l'extérieur,
- une sortie (10) par laquelle les impuretés séparées parviennent de l'espace brut (6) vers l'extérieur,
**caractérisé en ce**
**que** la coupelle (4') directement limitrophe de la sortie de gaz pur (9) présente un ensemble d'aubes (11) qui, lorsque le séparateur à coupelles (1) fonctionne, crée un courant de retour orienté radialement vers l'extérieur.

2. Séparateur à coupelles selon la revendication 1,
**caractérisé en ce**
**que**, sur un côté axial détourné des autres coupelles (4), l'ensemble d'aubes (11) est ouvert en direction du carter (2).

3. Séparateur à coupelles selon la revendication 1 ou 2,
**caractérisé en ce**
- **que** l'ensemble d'aubes (11) comporte des aubes droites qui s'étendent en ligne droite de l'intérieur vers l'extérieur, ou
- **que** l'ensemble d'aubes (11) comporte des aubes cintrées (13) qui s'étendent de manière cintrée radialement de l'intérieur vers l'extérieur et en opposition à la direction de rotation (14) du rotor (3) .

4. Séparateur à coupelles selon l'une des revendications 1 à 3,
**caractérisé en ce**
**que** l'extension radiale de la coupelle (4') pourvue de l'ensemble d'aubes (11) est plus grande que celle des autres coupelles (4).

5. Séparateur à coupelles selon l'une des revendications 1 à 4,
**caractérisé en ce**
**que** la coupelle (4') pourvue de l'ensemble d'aubes (11) s'étend radialement à l'extérieur jusqu'au carter (2) au point qu'il se forme un intervalle étanche (17) entre le carter (2) et un bord de coupelle (16).

6. Séparateur à coupelles selon l'une des revendications 1 à 5,
**caractérisé en ce**
**que** la coupelle (4') pourvue de l'ensemble d'aubes (11) comporte radialement à l'intérieur un moyeu cylindrique (18) qui s'étend en formant un intervalle étanche (20) le long d'une section de col cylindrique (19) du carter (2).

7. Séparateur à coupelles selon la revendication 6,
**caractérisé en ce**
**que** le moyeu (18) est réalisé de manière traversable axialement, de sorte que le gaz épuré parvient de l'espace pur (7) à la sortie de gaz pur (9) en passant par le moyeu (18) .

8. Séparateur à coupelles selon l'une des revendications 1 à 7,
**caractérisé en ce**
**que** la coupelle (4') pourvue de l'ensemble d'aubes (11) est reliée de manière solidaire en rotation avec le rotor (3), non pas directement mais indirectement par l'intermédiaire de la coupelle (4) voisine de celle-ci.
